# EUROPÄISCHE PATENTSCHRIFT

(11) **EP 4 069 973 B1**
(45) Veröffentlichungstag und Bekanntmachung des Hinweises auf die Patenterteilung: **03.04.2024**
(21) Anmeldenummer: 20815786.7
(22) Anmeldetag: 26.11.2020
(51) Int. Cl.: F03G 7/06

(54) **FORMVERÄNDERLICHE VERBUNDSTRUKTUR UND VERFAHREN ZUR FORMVERÄNDERUNG DERSELBEN**
SHAPE CHANGING COMPOSITE STRUCTURE AND PROCESS FOR SHAPING THE SAME
STRUCTURE COMPOSITE À FORME CHANGEANTE ET PROCÉDÉ POUR EN CHANGER LA FORME

(30) Priorität: 03.12.2019 DE 102019218793
(43) Veröffentlichungstag der Anmeldung: 12.10.2022
(73) Patentinhaber: Fraunhofer-Gesellschaft zur Förderung der angewandten Forschung e.V., 80686 München (DE)
(72) Erfinder: BOXBERGER, Lukas, 01445 Radebeul (DE)
(74) Vertreter: Grünecker Patent- und Rechtsanwälte PartG mbB
(86) Internationale Anmeldenummer: PCT/EP2020/083513
(87) Internationale Veröffentlichungsnummer: WO 2021/110535

(56) Entgegenhaltungen:
- EP-A1- 3 412 262
- WO-A1-98/29657
- CN-Y- 201 020 715
- ABDULLAH ERMIRA J ET AL: "Active control of strain in a composite plate using shape memory alloy actuators", INTERNATIONAL JOURNAL OF MECHANICS AND MATERIALS IN DESIGN, SPRINGER NETHERLANDS, DORDRECHT, Bd. 11, Nr. 1, 20. September 2014 (2014-09-20), Seiten 25-39, XP035461263, ISSN: 1569-1713, DOI: 10.1007/S10999-014-9277-7 [gefunden am 2014-09-20]
- SUP CHOI ET AL: "The shape control of a composite beam with embedded shape memory alloy wire actuators", SMART MATERIALS AND STRUCTURES, IOP PUBLISHING LTD., BRISTOL, GB, Bd. 7, Nr. 6, 1. Dezember 1998 (1998-12-01), Seiten 759-770, XP020072035, ISSN: 0964-1726, DOI: 10.1088/0964-1726/7/6/004

## Beschreibung

Die vorliegende Erfindung betrifft eine formveränderliche Verbundstruktur mit einem flexiblen Flächenelement, welches ausgebildet ist, um ausgehend von einem Ausgangszustand reversibel in wenigstens einen Verformungszustand überführt zu werden, sowie ein Verfahren zur Formveränderung der Verbundstruktur.

Derartige Verbundstrukturen sind aus dem Stand der Technik bekannt.

Die DE 10 2013 218 331 A1 beschreibt ein Wand- oder Dachelement mit einem Folienkissen für eine bewegliche Gebäudestruktur. Hierbei handelt sich um aufblasbare Folienkissen, welche mit einem Rahmen eingefasst sind. Durch Druckerhöhung und -verminderung in den Folienkissen entsteht eine bewegliche Gebäudestruktur. Durch solch eine Bewegung können zum Beispiel Dächer bestehend aus diesen Folienkissen geschlossen oder geöffnet werden.

In der DE 10 2010 034 954 B4 wird ein Verfahren zum Herstellen von verformten Merkmalen in einer Oberfläche eines Formgedächtnislegierungswerkstückes geschildert. Diese Druckschrift betrifft die Herstellung eines Blech- oder Metallfoliengegenstandes, der Formgedächtniseigenschaften aufweist und mit einem Muster geprägt ist, das mit einer Änderung in der Temperatur mehr oder weniger sichtbar gemacht werden kann. Hierbei sollen Bilder oder Muster infolge von Temperaturänderungen reversibel erscheinen und wieder verschwinden. Höhen, Tiefen und Abstände können verändert und geformt werden.

In der DE 10 2013 209 913 B4 wird eine Oberflächentexturierung mithilfe technischer Strukturen beschrieben. Diese Druckschrift betrifft ein System und ein Verfahren zum aktiven Verändern einer Oberflächentextur mithilfe technischer Systeme, die eine Anordnung von eigenständigen Mechanismen und stärker bevorzugt eine Betätigung mit einem aktiven Material verwenden. Die Betätigung des strukturierten Materialsystems kann herkömmliche elektromechanische Vorrichtungen wie Solenoide oder Motoren verwenden. Stärker bevorzugt integriert das System jedoch eine Betätigung mit einem aktiven Material (Formgedächtnislegierungen/Polymere, Phasenänderungsmaterialien etc.), was die Betätigung für das System intrinsisch macht.

Die US 5,804,276 A beschreibt eine Verbundstruktur, die eine kontrollierte Strukturverformung bewirken kann. Die Struktur setzt sich aus einer Vielzahl von Verbundwerkstoffschichten und mindestens einer eingebetteten Formgedächtnislegierungskomponente (Formgedächtnislegierungssehne) zusammen. Diese Komponente besteht auch aus einem Paar elektrisch isolierender gegensätzlicher Flächenplatten, die an den gegenüberliegenden Seiten der Formgedächtnislegierungssehne haften, um die Formgedächtnislegierungssehne von den umgebenden Verbundwerkstoffschichten elektrisch zu isolieren.

Neben den vorher erläuterten Patentschriften gibt es noch weiteren Stand der Technik aus der Nichtpatentliteratur.

Dazu gehören eine programmierbare Origami-Folie aus Nation, die sich bei bestimmten Temperaturen zu einer vorher festgelegten Form verformt (https://online-library.wiley.com/doi/full/10.1002/ange.201704443).

Des Weiteren gibt es Kunststofffolien, die sich nach Befeuchten automatisch zusammenfalten, jedoch ist dies nur im Millimeterbereich möglich (https://www.wissenschaft.de/technik-digitales/mini-origami-selbstfaltend/).

Außerdem zu erwähnen ist Graphen-Origamipapier, welches selbstständig vorgegebene Formen annehmen kann (https://advances.sciencemag.org/content/1/10/e1500533/tab-figures-data).

Zudem gibt es einen folienbasierten Miniaturaktor, welcher aus sehr kleinen gefalteten Formgedächtnisfolien besteht (https://www.memetis.com/de/aktorik/#form).

Eine weitere Erfindung aus dem Gebiet der adaptiven Oberflächen heißt "Unimorph". Darunter versteht man dünne Folienkomposite, welche ihre Oberfläche in der Form verändern können. Dazu werden die thermoelektrischen Eigenschaften von Kupfer mit der hohen thermischen Expansionsrate von ultrahochmolekularem Polyethylen kombiniert (https://vimeo.com/140531125).

Die Erfindung "flectofold" ist eine gelenklose Fassadenverschattung nach Vorbild der Unterwasserschnappfalle. Hier sind zwei steife Flügel mit einer starren, elliptisch geformten Mittelrippe über eine Biegezone mit geringerer Steifigkeit verbunden. Die Faltbewegung wird durch Biegen der Mittelrippe ausgelöst. Das auf biologischen Prinzipien beruhende Verschattungssystem besteht aus glasfaserverstärktem Kunststoff. Durch unterschiedliche Faserorientierungen und Laminatdicken innerhalb des Materials entstehen Bereiche mit unterschiedlichen Steifigkeiten für Flügel, Mittelrippe und Biegezone (https://www.messekompakt.de/flectofold:-gelenklose-fassadenverschattung-nach-vorbild-der-unterwasserschnappfalle).

Bei den genannten Lösungen bestehen folgende Nachteile:
DE 10 2013 218 331 A1: Hier wird Druckluft benötigt, um die Folienkissen aufzublasen und somit die Oberfläche zu bewegen. Bei Ausdehnung der Kammern wird sowohl innen als auch nach außen Platz benötigt.

DE 10 2010 034 954 B4: Hier besteht der ganze Gegenstand der Erfindung aus Formgedächtnismaterial. Deswegen ist die Erhitzung des gesamten Gegenstands notwendig und man kann nur wenige Millimeter verformen.

DE 10 2013 209 913 B4: In dieser Patentschrift geht es vorrangig um die Veränderung der Oberflächentextur ähnlich einer Pixelstruktur oder eines Brailledisplays.

Die oben genannten "Origami-Papiere" benötigen hohe Temperaturen oder Feuchtigkeit, um das Material zu aktivieren.

Unimorph: Hier können keine großen Kräfte übertragen werden. Außerdem erhitzt sich die gesamte Folie stark.

Flectofold: Diese Erfindung kann nur ein Faltmuster ausführen.

Dielektrische Elastomere: Bei dielektrischen Elastomeren werden derzeit noch hohe Spannungen benötigt (deutlich über 12V).

In mold electronics: Hier handelt es sich um ein dünnes Verbundmaterial mit integrierten Schaltkreisen. Jedoch ist dies nicht aktorisch.

Das Dokument EP 3 412 262 A1 offenbart ein zusammenziehbares Textilband zur Verwendung in einem tragbaren Kleidungsstück zum Ausüben von Druck auf einen Körperteil, das ein Formgedächtnismaterial, insbesondere eine Formgedächtnislegierung, SMA, und Glasfasersensoren umfasst.

Das Dokument WO 98/29657 A1 beschreibt eine Steuerung von Heizelementen anhand einer externen Steuerungseinheit und bestehend aus mehreren Detektoren aufgebracht auf einer flexiblen SMA Schicht.

Das Dokument CN 201 020 715 Y offenbart einen Handfinger bestehend aus einer elektrischen Formgedächtnislegierungmaschine (ESMA) mit zwei Krümmungssensoren auf einem Silizium-Kautschukzylinder und U geformter SMA Seide. Die beiden Sensoren auf den jeweiligen Fingern werden von einer externen Kontrolleinheit gesteuert.

Die Veröffentlichung ABDULLAH ERMIRA J ET AL: "Active control of strain in a composite plate using shape memory alloy actuators",INTERNATIONAL JOURNAL OF MECHANICS AND MATERIALS IN DESIGN, SPRINGER NETHERLANDS, DORDRECHT, Bd. 11, Nr. 1, 20. September 2014 (2014-09-20), Seiten 25-39, ISSN: 1569-1713, DOI: 10.1007/S10999-014-9277-7 offenbart eine Steuerung eines intelligenten Struktursystems, das aus einer gewebten Glasfaserlaminatplatte mit auf der Oberfläche angebrachten Aktoren aus einer Formgedächtnislegierung (SMA) besteht.

Die Veröffentlichung SUP CHOI ET AL: "The shape control of a composite beam with embedded shape memory alloy wire actuators",SMART MATERIALS AND STRUCTURES, IOP PUBLISHING LTD., BRISTOL, GB, Bd. 7, Nr. 6, 1. Dezember 1998 (1998-12-01), Seiten 759-770, ISSN: 0964-1726, DOI: 10.1088/0964-1726/7/6/004 legt eine Steuerung der Form eines flexiblen Verbundträgers mit eingebetteten Drahtaktoren aus einer Formgedächtnislegierung dar.

Der vorliegenden Erfindung liegt daher die Aufgabe zugrunde, eine formveränderliche Verbundstruktur bereitzustellen, die sich ändernden Umgebungsbedingungen eigenständig anpassen kann.

Zur Lösung dieser Aufgabe stellt die vorliegende Erfindung die formveränderliche Verbundstruktur nach Anspruch 1 bereit.

Diese formveränderliche Verbundstruktur umfasst: ein flexibles Flächenelement, welches ausgebildet ist, um ausgehend von einem Ausgangszustand reversibel in wenigstens zwei verschiedene Verformungszustände überführt zu werden, eine Aktoreinrichtung, die ausgebildet ist, um das Flächenelement zwischen dem Ausgangszustand und den wenigstens zwei verschiedenen Verformungszuständen zu überführen, eine Sensoreinrichtung, die konfiguriert ist, um Daten bezüglich der Verbundstruktur oder deren Umgebung zu erfassen und darauf basierend ein Ausgabesignal zu erzeugen, und eine Steuereinrichtung, die ausgebildet ist, um die Aktoreinrichtung in Abhängigkeit des Ausgabesignals der Sensoreinrichtung zu betätigen, vorzugsweise zu steuern oder zu regeln. Dadurch kann die Verbundstruktur auf geänderte Umgebungsbedingungen reagieren und selbstständig unterschiedliche Verformungszustände des Flächenelements herbeiführen. Mit Daten sind jegliche messbaren Parameter der Verbundstruktur oder deren Umgebung gemeint. Die Datenerfassung kann analog oder digital erfolgen.

Das Flächenelement im Sinne der Erfindung ist vorzugsweise in Form einer Folie ausgebildet aber ausdrücklich nicht auf eine Folie beschränkt. Das Flächenelement ist vorzugsweise elastisch oder gelenkig verformbar.

In einer vorteilhaften Ausführung ist die Verbundstruktur ein mehrlagiges, programmierbares Verbundmaterial, das Umgebungsbedingungen detektieren, mit intrinsischem, reversiblem Verändern seiner Topologie reagieren und dadurch eigenständig Aufgaben erledigen kann.

Die Bewegung einer adaptiven Folienverbundstruktur kann unterschiedlich erfolgen, je nachdem welches Falt- oder Bewegungsmuster dem Verbundmaterial vorgegeben ist. Ebenso kann die Ausprägung der Oberflächenverformung variabel eingestellt bzw. initial "programmiert" werden. Die Verbundstruktur soll keinem vorgegebenen Faltmuster unterliegen, soweit der Fokus auf dem materiellen Aufbau des Verbundmaterials liegt, weil die Formveränderung oder Faltung vielseitig sein soll.

Das Verbundmaterial besteht vorzugsweise aus mehreren Lagen von flexiblem Kunststoff, die durch Schweißen, Kleben, Pressen oder andere (Füge-)Verfahren miteinander verbunden sein können. Dabei kann jede Kunststofflage über besondere funktionale Eigenschaften verfügen. Die Flächenform der Folienstücke kann ebenso wie das bewegungsvorgebende Muster beliebig gewählt werden. Die Kombination der Schichten mit einem aktiven Material ermöglicht die selbstständige Bewegung und Verformung des Folienverbundmaterials. Die erzeugte Folienkinematik eignet sich zur Gestaltung jeglicher Oberflächen, die bewegt werden sollen.

Die Einsatzmöglichkeiten des Verbundmaterials sind vielseitig. Denkbar ist beispielsweise die Anpassung an sich verändernde aerodynamische oder akustische Anforderungen oder auch die visuelle und haptische Veränderung von Strukturen. Diese Anpassungen können unter anderem durch die Veränderung mechanischer Eigenschaften wie beispielsweise anpassbare Steifigkeit erfolgen.

Vorteilhafte Weiterbildungen der Erfindung sind Gegenstände der abhängigen Ansprüche
Es kann sinnvoll sein, wenn die Verbundstruktur eine Stützeinrichtung zur Stabilisierung und Formwahrung des Flächenelements aufweist. Durch die Stützeinrichtung kann/können ein oder mehrere Verformungsmuster des Flächenelements gezielt vorgegeben werden. Die Stützeinrichtung ist vorzugsweise elastisch oder gelenkig verformbar.

Es kann aber auch von Vorteil sein, wenn die Stützeinrichtung eine Mehrzahl von Gliedern zur Aufspannung des Flächenelements umfasst, vorzugsweise mit wenigstens einer der folgenden Eigenschaften:
- Die Glieder bilden ein Skelett für das Flächenelement, vorzugsweise ein Endoskelett oder ein Exoskelett.
- Die Glieder bilden ein Netz.
- Die Glieder sind sternförmig um ein Zentrum angeordnet.
- Wenigstens eines der Glieder erstreckt sich entlang einer geraden oder gekrümmten Linie.
- Wenigstens eines der Glieder erstreckt sich zumindest abschnittsweise entlang einer inneren oder äußeren Konturlinie des Flächenelements.
- Wenigstens eines der Glieder ist elastisch verformbar.
- Wenigstens eines der Glieder ist flexibel.
- Wenigstens eines der Glieder weist eine höhere Biegesteifigkeit auf als das Flächenelement, insbesondere gegenüber einer Biegung aus der Erstreckungsebene des Flächenelements.
- Wenigstens eines der Glieder erstreckt sich von/und oder zu einem Zentrum des Flächenelements.
- Wenigstens eines der Glieder erstreckt sich von/und oder zu einem Eckpunkt des Flächenelements.
- Wenigstens zwei der Glieder sind an einem Knotenpunkt miteinander verbunden.
- Wenigstens zwei der Glieder sind gelenkig miteinander verbunden.
- Wenigstens zwei der Glieder bilden einen Zwischenraum, der von dem Flächenelement abschnittsweise oder vollständig überspannt werden.
- Mehrere Glieder bilden mehrere Zwischenräume, die von dem Flächenelement abschnittsweise oder vollständig überspannt werden.
- Wenigstens eines der Glieder ist ausgebildet, um sich bei Betätigung der Aktoreinrichtung gemeinsam mit dem Flächenelement zu verformen.
- Wenigstens eines der Glieder, vorzugsweise mehrere oder alle Glieder, erstreckt/erstrecken sich zwischen zwei Schichten des Flächenelements.
- Wenigstens eines der Glieder, vorzugsweise mehrere oder alle Glieder, erstreckt/erstrecken an einer Außenseite des Flächenelements.

Mit diesen Merkmalen kann die Stützeinrichtung auf individuelle Anwendungsfälle gezielt zugeschnitten werden.

Es kann sich aber auch als nützlich erweisen, wenn die Aktoreinrichtung wenigstens ein Aktorelement zur Verformung des Flächenelements umfasst, vorzugsweise mit wenigstens einer der folgenden Eigenschaften:
- Das Aktorelement ist aus einem aktiven Material ausgebildet.
- Das Aktorelement ist aus einem Formgedächtnismaterial, vorzugsweise als Legierung oder Polymer, ausgebildet.
- Das Aktorelement ist aus einem Phasenänderungsmaterial ausgebildet.
- Das Aktorelement ist als Draht oder Band ausgebildet.
- Das Aktorelement erstreckt sich quer über einen zu verformenden Abschnitt des Flächenelements, vorzugsweise quer über einen von Gliedern der Stützeinrichtung gebildeten Zwischenraum.
- Das Aktorelement ist durch elektrische Ansteuerung, vorzugsweise durch Anlegen einer Ansteuerspannung, betätigbar, bevorzugt mechanisch verformbar.
- Das Aktorelement ist derart mit dem Flächenelement gekoppelt, um dessen Verformung auf das Flächenelement zu übertragen.
- Mehrere Aktorelemente bilden ein das Flächenelement überspannendes Netz.
- Mehrere Aktorelemente sind sternförmig um ein Zentrum angeordnet.
- Das Aktorelement erstreckt sich entlang einer geraden oder gekrümmten Linie.
- Das Aktorelement erstreckt sich von/und oder zu einem Zentrum des Flächenelements.
- Das Aktorelement erstreckt sich von/und oder zu einer Konturline zwischen zwei Eckpunkten des Flächenelements.
- Das Aktorelement ist ausgebildet, um sich durch ein von der Steuereinrichtung ausgegebenes, thermisches, elektrisches oder magnetisches Signal zu verformen.
- Die Spannung zur Betätigung des Aktorelements liegt im Bereich von 8 bis 16 V, vorzugsweise im Bereich von 10 bis 14 V, bevorzugt bei 12 V. Zur Verformung einer größeren Fläche in gleicher Geometrie sind tendenziell kleinere Spannungen und größere Stromstärken notwendig. In umgekehrter Weise verhält es sich, wenn das dargelegte Geometriebeispiel kleiner ausfallen sollte. Ebenso die "Faltgeometrie", welcher der "Gelenkgeometrie" zugrunde liegt, hat einen wesentlichen Einfluss auf die benötigte Energie. Andere Aktormaterialien (anstelle FGL) wie bspw. Polymeren, würden bei gleicher Geometrie wie im dargelegten Beispiel ebenfalls andere Bestromungsparameter benötigen.
- Die Stromstärke zur Betätigung des Aktorelements liegt im Bereich von 0,1 bis 5 A, vorzugsweise im Bereich von 0,2 bis 1 A, bevorzugt bei 0,5 A.
- Das Aktorelement wird mit Energie versorgt, die in der Verbundstruktur, vorzugsweise in der Aktoreinrichtung, gespeichert wird, beispielsweise einer Batterie/Akku, oder erzeugt wird, beispielsweise mit einem Generator, oder gewonnen wird, beispielsweise mit einer Solarzelle. Die Stromzufuhr kann aber auch von extern erfolgen.
- Das Aktorelement übt eine translatorische und/oder rotatorische Kraft auf die Stützeinrichtung und/oder das Flächenelement aus.

Mit diesen Merkmalen kann die Verformung des Flächenelements gezielt gesteuert werden.

Es kann auch praktisch sein, wenn die Aktoreinrichtung und/oder die Sensoreinrichtung und/oder die Steuereinrichtung und/oder die Stützeinrichtung fest mit dem Flächenelement verbunden sind, vorzugsweise Teil(e) des Flächenelements oder eine mit dem Flächenelement verformbare Einheit bildet/bilden, und bevorzugt in das Flächenelement eingebettet ist/sind. Dadurch lassen sich die Einrichtungen der Verbundstruktur besonders kompakt und ggf. von außen nicht sichtbar innerhalb des Flächenelements unterbringen. Ein hoher Kraftschluss zwischen bspw. "Epidermis" und "Endoskelett" ist generell vorteilhaft, zwischen "sensitiver Schicht" und "Epidermis" muss das nicht unbedingt sein.

Es kann sich überdies als nützlich erweisen, wenn das Flächenelement im Ausgangszustand oder in einem der beiden Verformungszustände eben, gekrümmt oder gefaltet ist, wobei das Flächenelement in einem ebenen Zustand vorzugsweise einen polygonalen, bevorzugt viereckigen, besonders bevorzugt quadratischen Umriss aufweist. Die Außengeometrie des Flächenelements kann aber auch rund, elliptisch oder dergleichen sein. Mit diesen Merkmalen kann das Flächenelement seine aerodynamischen, akustischen, optischen, haptischen oder visuellen Eigenschaften ändern. Im Fokus der Erfindung steht aber nicht die Beispielgeometrie, sondern der strukturelle Aufbau des Verbundmaterials und die Eigenschaften/Funktionsmöglichkeiten dessen - sprich die Art und Weise der Umsetzung der Funktionsintegration in die Materialebene - die Erzeugung eines formveränderlichen Materials, welches nachträglich programmiert werden kann. Dieser Aspekt ist losgelöst von der Faltgeometrie.

Es kann auch sinnvoll sein, wenn die Sensoreinrichtung wenigstens einen der folgenden Sensoren aufweist: Gegenstandssensor, Bewegungssensor, Temperatursensor, Helligkeitssensor, Lautstärkesensor, Entfernungssensor, Beschleunigungssensor, Kraftsensor, Gassensor, wobei der Sensor vorzugsweise in das Flächenelement eingebettet oder eingedruckt ist. Dadurch lassen sich Zustandsänderungen der Verbundstruktur oder des Flächenelements, aber auch Änderungen in den Umgebungsbedingungen erkennen und in Signale zur Verformung des Flächenelements umsetzen.

Es kann sich als hilfreich erweisen, wenn das Flächenelement wenigstens eine Schicht aufweist, bevorzugt mit wenigstens einer der folgenden Eigenschaften:
- Die Schicht ist zumindest abschnittsweise aus Metall und/oder Kunststoff und/oder Holz und/oder Textil hergestellt.
- Die Schicht weist eine Faserverstärkung auf, vorzugsweise eine Glasfaserverstärkung.
- Die Schicht weist eine elektrische Schaltung auf.
- Die Schicht weist elektronische Kontaktierung auf.
- Die Schicht weist elektronische Komponenten auf.
- Die Schicht ist wasserundurchlässig ausgebildet.
- Die Schicht weist ein Dekor auf.
- Die Schicht weist elektrische Leiter auf, wobei die elektrischen Leiter vorzugsweise als Leitungsdrähte oder geätzte Leiterbahnen ausgebildet sind.
- Die Schicht weist eine Dicke im Bereich von 10 bis 1000 µm, vorzugsweise im Bereich von 50 bis 500 µm, bevorzugt im Bereich von 100 bis 300 µm auf. Beispielsweis kann die "Epidermis" eine Dicke unter 100 µm aufweisen. Das "Endoskelett" kann eine Dicke von 1000 µm oder mehr aufweisen.
- Die Schicht ist als Folie ausgebildet, vorzugsweise aus Metall und/oder aus Kunststoff.
- Die Schicht ist als Textilmatte ausgebildet.
- Die Schicht umfasst eine Mehrzahl von gelenkig verbundenen Elementen.
- Wenigstens zwei der Schichten weisen unterschiedliche Dicken auf.
- Wenigstens zwei der Schichten weisen unterschiedliche Faserorientierungen auf, wobei die Fasern unterschiedlicher Schichten vorzugsweise senkrecht oder im Winkel von 45° zueinander ausgerichtet sind.
- Wenigstens zwei der Schichten weisen unterschiedliche Flächenträgheitsmomente bezüglich einer Biegung aus ihrer Erstreckungsebene auf.
- Wenigstens zwei der Schichten weisen unterschiedliche Biegesteifigkeiten bezüglich einer Biegung aus ihrer Erstreckungsebene auf.
- Wenigstens zwei der Schichten sind aus unterschiedlichen Materialien gefertigt.
- Wenigstens zwei der Schichten sind fest verbunden, vorzugsweise durch Schweißen, Kleben oder Pressen.
- Wenigstens zwei der Schichten sind, soweit vorhanden, in folgender Reihenfolge von außen nach innen angeordnet:
   ∘ Epidermis-Schicht, die vorzugsweise wasserundurchlässig ausgebildet ist, bevorzugt auf der Außenseite ein Dekor aufweist.
   ∘ Endoskelett-Schicht, umfassend die Stützeinrichtung.
   ∘ Rezeptive Schicht, umfassend die Sensoreinrichtung.
   ∘ Neuronale Schicht, umfassend die Steuereinrichtung.
   ∘ Muskulatur-Schicht, umfassend die Aktoreinrichtung.
   ∘ Epidermis-Schicht, die vorzugsweise wasserundurchlässig ausgebildet ist.

Zwischen den "Epidermis-Schichten" kann die Reihenfolge der Schichten variieren. Zwei oder mehr Schichten können mitunter, je nach Anwendungsfall, auch kombiniert sein, bspw. rezeptive Schicht, neuronale Schicht und Muskulatur-Schicht.

Es kann sich als nützlich erweisen, wenn die Verbundstruktur wenigstens eine der folgenden Eigenschaften aufweist:
- Die Dicke der Verbundstruktur, vorzugsweise des Flächenelements, liegt im Bereich von 0,1 bis 5 mm, vorzugsweise 1 bis 3 mm, bevorzugt 2 mm.
- Ein durch Überführung des Flächenelements zwischen dem Ausgangszustand und den wenigstens zwei verschiedenen Verformungszuständen erzielbarer Hub, der vorzugsweise senkrecht zu einer Erstreckungsebene des Flächenelements gemessen wird, liegt bei mindestens dem 10-fachen der Dicke der Verbundstruktur, vorzugsweise des Flächenelements, bevorzugt bei wenigstens dem 20-fachen.
- Ein durch Überführung des Flächenelements zwischen dem Ausgangszustand und den wenigstens zwei verschiedenen Verformungszuständen erzielbarer Hub, der vorzugsweise senkrecht zu einer Erstreckungsebene des Flächenelements gemessen wird, liegt bei mindestens 10 mm, vorzugsweise mindestens 20 mm, bevorzugt bei mindestens 30 mm.
- Die Verbundstruktur ist ausgebildet, um durch Überführung des Flächenelements zwischen dem Ausgangszustand und den wenigstens zwei verschiedenen Verformungszuständen seine aerodynamischen und/oder akustischen und/oder visuellen und/oder haptischen und/oder mechanischen (Steifigkeit) und/oder topologischen Eigenschaften (Geometrisch) zu verändern.
- Die Verbundstruktur oder das Flächenelement ist nach wenigstens einem der folgenden Verfahren hergestellt: Laminieren, Kleben, 3D-Druck, Spritzguss, Tiefziehen oder Heißpressen.
- Die Verbundstruktur umfasst eine Einrichtung zur Energiespeicherung und/oder eine Einrichtung zur Energieerzeugung und/oder eine Einrichtung zur Energiegewinnung, wobei diese Einrichtung(en) vorzugsweise die Aktoreinrichtung und/oder die Sensoreinrichtung und/oder die Steuereinrichtung mit Energie versorgt, wobei diese Einrichtung(en) bevorzugt Teil(e) des Flächenelements oder eine mit dem Flächenelement verformbare Einheit bildet/bilden, und bevorzugt in das Flächenelement eingebettet ist/sind. Externe Einrichtungen zur Energiespeicherung, Energieerzeugung oder Energiegewinnung können ebenso verwendet werden.

Ein weiterer Aspekt der vorliegenden Erfindung betrifft ein Verfahren zur Betätigung der Verbundstruktur nach einem der vorangehenden Ansprüche, wobei das Verfahren folgende Schritte umfasst:
- Erfassen von Daten bezüglich der Verbundstruktur oder deren Umgebung und Ausgabe eines darauf basierenden Ausgabesignals mittels der Sensoreinrichtung.
- Betätigen (Steuern oder Regeln) der Aktoreinrichtung mittels der Steuereinrichtung in Abhängigkeit des Ausgabesignals der Sensoreinrichtung, um das Flächenelement zwischen dem Ausgangszustand und den wenigstens zwei verschiedenen Verformungszuständen zu überführen.

Weiterer vorteilhafte Ausführungsbeispiele ergeben sich durch Kombinationen der in den Ansprüchen offenbarten Merkmale mit Merkmalen aus der Beschreibung oder den Zeichnungen.

Durch die Erfindung werden die Gestaltungs- und Nutzungsmöglichkeiten von Oberflächen enorm erweitert. Ohne komplexe Apparaturen für Antrieb und Bewegungsumsetzung, ohne Energieträgermedien wie Gase und Fluide und mit nur wenig Energie kann das Material dafür genutzt werden, Oberflächen topologisch zu verändern und aktorische Aufgaben zu übernehmen.

Die erfindungsgemäße Verbundstruktur kann Umgebungsbedingungen analysieren, verarbeiten und aktiv mit einer topologischen Veränderung seiner Form reagieren. Die Eigenschaften, primär die Topologie der Verbundstruktur, sind gezielt aktiv oder passiv veränderbar. Durch die Integration von Werkstoff, Aktorik, Sensorik und Reglungselektronik werden hochkomplexe Strukturen erzeugt und eine intelligente, funktionale Materialkomponente geschaffen. Der mehrlagige Aufbau und die verschiedenen Schichten erlauben eine optimale Anpassung bzw. Einstellung des Verbundwerkstoffs an seine Arbeitsaufgabe.

### Kurze Beschreibung der Figuren

Es zeigen:
Fig. 1 eine perspektivische und computergenerierte Ansicht einer erfindungsgemäßen, formveränderlichen Verbundstruktur nach einem ersten Ausführungsbeispiel, umfassend ein transparentes Flächenelement und eine in das Flächenelement eingebettete, skelettartige Stützeinrichtung sowie in das Flächenelement eingebetteten Schichten mit Elementen der Aktor,- Sensor- und Steuereinrichtungen.
Fig. 2 den Schichtaufbau der erfindungsgemäßen Verbundstruktur nach Fig. 1 in einer perspektivischen Explosionsansicht.
Fig. 3 in Ansicht (a) eine fotografische Abbildung einer erfindungsgemäßen Verbundstruktur gemäß dem ersten Ausführungsbeispiel in einem Ausgangszustand und in Ansicht (b) dieselbe Verbundstruktur in einem Verformungszustand.
Fig. 4 eine perspektivische Ansicht einer erfindungsgemäßen Verbundstruktur nach einem zweiten Ausführungsbeispiel, umfassend ein flexibles, mehrlagiges Flächenelement mit einem netzartigen Exoskelett als Stützeinrichtung, das eine Vielzahl von an Knotenpunkten verbundenen Gliedern aufweist, wobei die Elemente der Aktor,- Sensor- und Steuereinrichtungen als Schichten in das Flächenelement integriert sind.
Fig. 5 eine perspektivische Ansicht einer erfindungsgemäßen Verbundstruktur nach einem dritten Ausführungsbeispiel, umfassend ein flexibles, mehrlagiges und transparentes Flächenelement mit in eigenen Schichten eingebetteten Sensor-, Steuer-, Aktor- und Stützeinrichtungen (nicht dargestellt).
Fig. 6 eine perspektivische Ansicht einer erfindungsgemäßen Verbundstruktur nach einem vierten Ausführungsbeispiel, umfassend ein flexibles Flächenelement aus einem Holzfurnier mit eingebetteten Sensor-, Steuer-, Aktor- und Stützeinrichtungen (nicht dargestellt).

### Detaillierte Beschreibung der bevorzugten Ausführungsbeispiele

Die Erfindung betrifft eine mehrlagige formveränderliche Verbundstruktur 1. Die Verbundstruktur 1 kann insbesondere als Folienverbundstruktur ausgebildet sein, wobei jede Folienschicht eine Teilaufgabe innerhalb des Gesamtsystems übernimmt - vergleichbar mit einem Organismus. Die Schichten unterscheiden sich vorzugsweise in ihrem strukturellen Aufbau und zuweilen Ihrer Materialität. Durch die dünne Materialstärke (im Mikrometer- bis Millimeterbereich) können mehrere Folien miteinander kombiniert werden und selbstständig untergeordnete Aufgaben ausführen. Im Vordergrund steht beispielsweise die reversible Veränderung der Topologie. Dies erfolgt z.B. durch die Betätigung einer Formgedächtnislegierung, d.h. eines aktiven Materials (Formgedächtnislegierungen/Polymere, Phasenänderungsmaterialien etc.). Formgedächtnislegierungen sind metallische Materialien, die die Eigenschaft besitzen, sich an eine zuvor definierte Form zu "erinnern", wenn sie thermischen, elektrischen oder magnetischen Reizen ausgesetzt werden.

Die einzelnen Funktionsschichten können im Gesamtverbund mehrfach vorhanden sein bzw. sich in regelmäßigen oder unregelmäßigen Abständen wiederholen. Die Reihenfolge der Schichtenanordnung ist variabel. Die nachfolgende Beschreibung der bevorzugten Ausführungsformen ist rein beispielhaft und soll die Erfindung, ihre Anwendung oder ihre Verwendungen in keiner Weise einschränken.

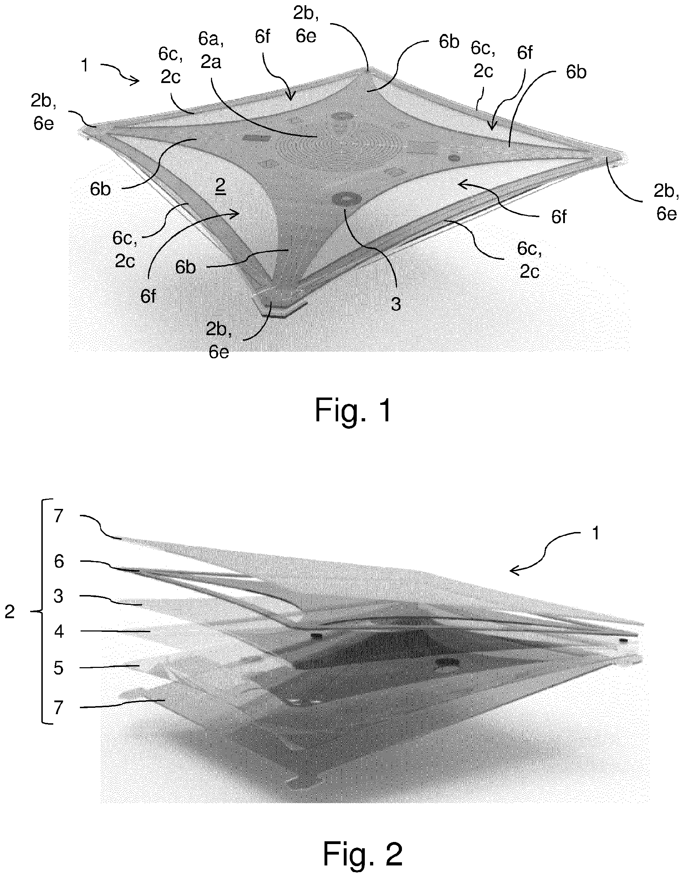

### Erstes Ausführungsbeispiel (Fig. 1 bis 3)

Im ersten Ausführungsbeispiel, das nachstehend mit Bezug auf die Figuren 1 bis 3 beschrieben wird, ist die formveränderliche Verbundstruktur 1 als flexibles Flächenelement 2 aus mehreren laminierten Schichten ausgebildet, wobei einzelne Schichten des Flächenelements 2 die Sensor-, Steuer-, Aktor- und Stützeinrichtungen 3, 4, 5 bzw. 6 enthalten bzw. deren Funktionen erfüllen.

In der Draufsicht auf die Erstreckungsebene umfasst das Flächenelement 2 einen quadratischen Umriss.

Die beiden innersten bzw. äußeren Schichten 7 der Verbundstruktur 1 bilden die visuelle Oberfläche des flexiblen Flächenelements 2 - die Haut bzw. Epidermis. Sie sind beliebig gestalt- bzw. bedruckbar, halten alle weiteren Schichten zusammen und schützen die inneren Komponenten vor ungewünschten äußeren Einflüssen. Unter der Oberfläche befindet sich die Stützeinrichtung 6 als bewegungsvorgebende, kinematische Schicht - das Endoskelett. Diese Schicht gibt die Form der Oberflächenveränderung und deren Intensität vor. Diese Folie besteht aus einem festeren, stabileren Material, um eine einwandfreie Faltung zu gewährleisten. Darunter folgt eine rezeptive Schicht mit der integrierten Sensorik, welche die Sensoreinrichtung 3 bildet. Hier befinden sich eingedruckte oder eingebettete Sensoren, welche die unmittelbare Umgebung der Folie erfassen. Bezüglich der Messgrößen gibt es keine Einschränkungen. So können beispielsweise Gegenstände, Bewegungen, Temperatur, Helligkeit, Lautstärke, Entfernungen usw. vom Verbund erfasst bzw. gemessen werden. Die neuronale Schicht übernimmt als Steuereinrichtung 4 die Verbindung der Sensoreinrichtung 3 und der Aktoreinrichtung 5 - d.h. die Verbindung der rezeptiven und aktiven Schicht - mit Ansteuerung. Die die Steuereinrichtung 4 aufweisende Schicht beherbergt die Leiterbahnen und die mechanische/elektrische Kontaktierung der einzelnen Bauteile und aktiven Materialien. Die Ansteuerung erfolgt über eine elektronische Schaltung. Es schließt sich nach innen die Aktoreinrichtung 5 als aktive, aktorische Schicht an - die Muskulatur. Hier erfolgt die Kraftausübung, welche die Faltung der Folie initiiert. Eingebettete aktive Materialien üben translatorische Kräfte auf die Stützeinrichtung 6 als endoskeletöse Schicht aus. Diese wiederum bewegt, in der Ihr strukturell vorgegebenen Weise, die umliegenden Schichten mit.

In der Draufsicht umfasst das Flächenelement 2 einen quadratischen Umriss. Die skelettartige Stützeinrichtung 6 umfasst eine Vielzahl von Gliedern 6b, 6c, die an Knotenpunkten 6e z.B. an den Ecken 2b des Flächenelements 2 verbunden sind. Einige Glieder 6b erstrecken sich diagonal über das Flächenelement 2 und dessen Zentrum 2a bzw. das Zentrum 6a der Stützeinrichtung 6 zwischen den Eckpunkten 2b des Flächenelements. Andere Glieder 6c verlaufen in gerader Linie entlang der Außenkanten 2c bzw. entlang der äußeren Konturlinien 2c des Flächenelements, um sich an den Knotenpunkten 6e mit den diagonal verlaufenden Gliedern 6b zu verbinden. Die Glieder 6b und 6c der Stützeinrichtung 6 bilden insgesamt vier bogensegmentförmige Zwischenräume bzw. Fenster 6f, die durch die benachbarten Schichten des Flächenelements 2 überspannt werden.

Die Verbundstruktur 1 kann im inaktiven Zustand, der als Ausgangszustand bezeichnet wird, eben, gekrümmt oder gefalten sein - je nach Anwendungsfall.

Die Verbundstruktur 1 kann auch in einem aktiven Zustand, der als Verformungszustand bezeichnet wird, eben, gekrümmt oder gefalten sein - je nach Anwendungsfall.

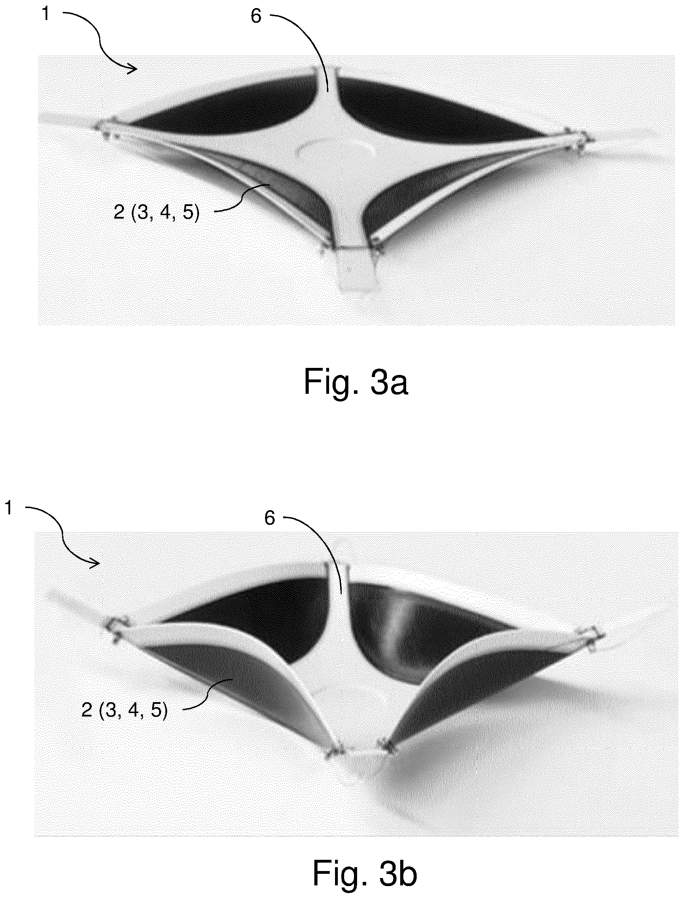

Die fotografischen Abbildungen gemäß den Figuren 3a und 3b zeigen die erfindungsgemäße Verbundstruktur 1 gemäß dem ersten Ausführungsbeispiel in einem Ausgangszustand (Figur 3a), in welchem das Flächenelement 2 sich näherungsweise in einer Ebene erstreckt, bzw. in einem ersten Verformungszustand, in welchem die sich diagonal über das Flächenelement 2 erstreckenden Glieder der Stützeinrichtung 6 bogenförmig aus der Erstreckungsebene des Flächenelements 2 gekrümmt sind. Durch nimmt das Flächenelement 2 im Verformungszustand eine näherungsweise schalenförmige Gestalt an, die zur Oberseite konkav und zur Unterseite konvex gewölbt ist. Durch Betätigung der Aktoreinrichtung 5, die bedingt durch die von der Sensoreinrichtung 3 ausgegebenen Signale von der Steuereinrichtung 4 angesteuert wird, wird das über die Stützeinrichtung 6 gespannte Flächenelement 2 entsprechend verformt.

Die Verbundstruktur 1 kann eben produziert und nachträglich (z.B. thermisch) umgeformt werden. Dies kann beispielsweise notwendig sein um eine Vorzugsrichtung für die auszuführende topologische Veränderung des Verbundmaterials zu initiieren, auszubilden oder zu verstärken.

### Weitere Ausführungsbeispiele

Die Verbundstruktur 1 muss nicht vollständig aus Kunststoffschichten bestehen. In den nachfolgenden Ausführungsbeispielen sind weitere Materialkombinationen dargestellt.

Der Aufbau der Verbundstruktur 1 und die Funktionsweise des Flächenelements 2 sowie der Sensor-, Steuer-, Aktor- und Stützeinrichtungen 3, 4, 5 bzw. 6 sind in den weiteren Ausführungsbeispielen vorzugsweise identisch wie im ersten Ausführungsbeispiel, soweit die Unterschiede nicht explizit angegeben sind.

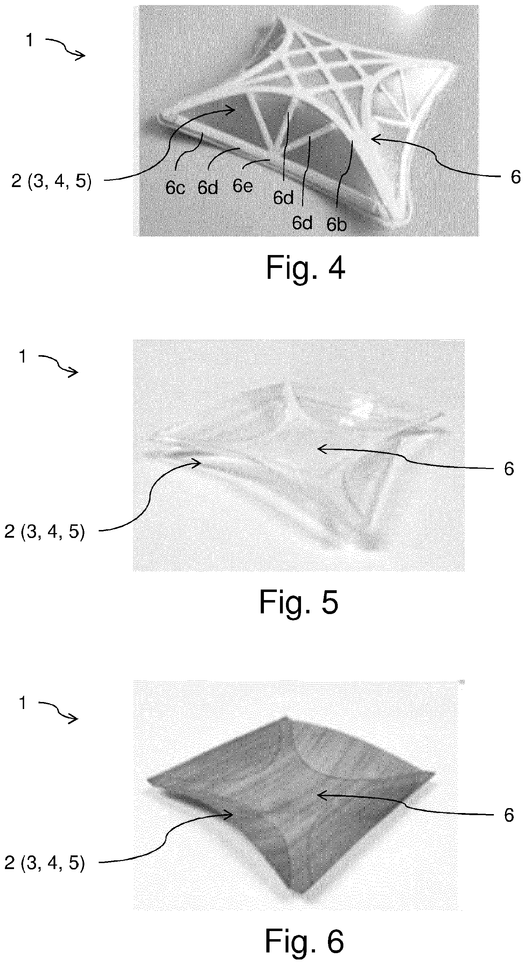

### Zweites Ausführungsbeispiel (Fig. 4)

Gemäß dem zweiten Ausführungsbeispiel, das nachstehend mit Bezug auf Fig. 4 beschrieben wird, umfasst die Verbundstruktur 1 ein flexibles, mehrlagiges Flächenelement 2 mit einer äußeren Stützeinrichtung 6 zur Ausbildung eines netzartigen Exoskeletts, das eine Vielzahl von an Knotenpunkten 6e verbundenen Gliedern 6b, 6c, 6d mit dazwischen ausgebildeten Zwischenräumen aufweist. Die Sensor-, Steuer-, Aktor- und Stützeinrichtungen 3, 4, 5 bzw. 6 und deren Komponenten sind jeweils in eine eigene Schicht eingebettet in das Flächenelement 2 integriert. Die Verbundstruktur 1 besteht vorzugsweise aus einem Kunststoff-Textil Hybridmaterial und wird beispielsweise im 3D-Druckverfahren, alternativ oder ergänzend im Spritzguss- bzw. Tiefziehverfahren hergestellt.

### Drittes Ausführungsbeispiel (Fig. 5)

Gemäß dem dritten Ausführungsbeispiel, das nachstehend mit Bezug auf Fig. 5 beschrieben wird, umfasst die Verbundstruktur 1 ein flexibles, mehrlagiges und transparentes Flächenelement mit eingebetteten Sensor-, Steuer-, Aktor- und Stützeinrichtungen 3, 4, 5 bzw. 6 (nicht dargestellt).

Die Verbundstruktur 1 besteht vorzugsweise aus einem Mehrkomponenten-Kunststoff und wird z.B. durch Lamination, alternativ oder ergänzend im Heißpress- bzw. Tiefziehverfahren hergestellt.

### Viertes Ausführungsbeispiel (Fig. 6)

Gemäß dem dritten Ausführungsbeispiel, das nachstehend mit Bezug auf Fig. 6 beschrieben wird, umfasst die Verbundstruktur 1 ein flexibles Flächenelement 2 aus einem Holzfurnier mit eingebetteten Sensor-, Steuer-, Aktor- und Stützeinrichtungen 3, 4, 5 bzw. 6 (nicht dargestellt). Die Schichten des Holzfurniers werden vorzugsweise geklebt, gegebenenfalls laminiert, ergänzend sind.

### Vorteile der Erfindung

Die erfindungsgemäße Verbundstruktur 1 umfasst sowohl sensitive, kognitive als auch reaktive Fähigkeiten. Ermöglicht werden kann dies durch die Integration von Sensorik, Aktorik, Steuerungselektronik, Kinematik in Gestalt der Sensor-, Steuer-, Aktor- und Stützeinrichtungen 3, 4, 5 bzw. 6 in die Materialebene. Das Verbundmaterial kann "programmiert" werden, d.h. auf jede Schicht des Materialverbundes kann initial (bei der Produktion des Verbundes) aktiv Einfluss genommen und die Eigenschaften, entsprechen der optimalen Ausführung der Arbeitsaufgabe, verändert werden. Gleichsam wird eine nachträgliche Manipulation der rezeptiven und reaktiven Fähigkeiten möglich - das Material ist justierbar.

Die erfindungsgemäße Verbundstruktur 1 benötigt niedrigere Temperaturen, um sich zu verformen. Auch ist keine Feuchtigkeit erforderlich, um das Material zu aktivieren und mit nur wenig Energie können große Formveränderungen erzeugt werden. Man benötigt kein zusätzliches Energieträgermedium wie Gase oder Fluide. Insgesamt können mit dem erfindungsgemäßen Verbundmaterial bei geringer Energiezuführung große Bewegungen und Kräfte erzeugt werden, um die Topologie der Verbundstruktur 1 ändern.

Die erfindungsgemäße Verbundstruktur 1 kann einen mehrlagigen Aufbau mit unterschiedliche Materialeigenschaften je Schicht aufweisen. Die Sensoreinrichtung 3 ermöglicht ein Erfassen des näheren Umfeldes. Außerdem kann die erfindungsgemäße Verbundstruktur 1 verschiedene Faltmuster ausführen.

### Bezugszeichenliste

- 1: Verbundstruktur
- 2: Flächenelement
- 2a: Zentrum des Flächenelements
- 2b: Eckpunkt des Flächenelements
- 2c: Außenkante bzw. äußere Konturlinie des Flächenelements
- 3: Sensoreinrichtung bzw. rezeptive Schicht
- 4: Steuereinrichtung bzw. neuronale Schicht
- 5: Aktoreinrichtung bzw. Muskulaturschicht
- 6: Stützeinrichtung (Skelett)
- 6a: Zentrum der Stützeinrichtung
- 6b: Glied, welches sich vom/zum Eckpunkt des Flächenelements erstreckt
- 6c: Glied, welches sich entlang einer Konturlinie des Flächenelements erstreckt
- 6d: Glied, welches sich von/zu einem Knotenpunkt des Flächenelements erstreckt
- 6e: Knotenpunkt
- 6f: Ausschnitt bzw. Fenster
- 7: Epidermis-Schicht

## Patentansprüche

1. Formveränderliche Verbundstruktur (1), umfassend: ein flexibles Flächenelement (2), welches ausgebildet ist, um ausgehend von einem Ausgangszustand reversibel in wenigstens zwei verschiedene Verformungszustände überführt zu werden, eine Aktoreinrichtung (5), die ausgebildet ist, um das Flächenelement (2) zwischen dem Ausgangszustand und den wenigstens zwei verschiedenen Verformungszuständen zu überführen, eine Sensoreinrichtung (3), die konfiguriert ist, um Daten bezüglich der Verbundstruktur (1) oder deren Umgebung zu erfassen und darauf basierend ein Ausgabesignal zu erzeugen, und eine Steuereinrichtung (4), die ausgebildet ist, um die Aktoreinrichtung (5) in Abhängigkeit des Ausgabesignals der Sensoreinrichtung (3) zu betätigen,
**dadurch gekennzeichnet, dass** die Aktoreinrichtung (5), die Sensoreinrichtung (3) und die Steuereinrichtung (4) fest mit dem Flächenelement (2) verbunden sind und mit dem Flächenelement (2) eine verformbare Einheit bilden.

2. Verbundstruktur (1) nach Anspruch 1, **dadurch gekennzeichnet, dass** die Verbundstruktur (1) eine Stützeinrichtung (6) zur Stabilisierung und Formwahrung des Flächenelements (2) aufweist.

3. Verbundstruktur (1) nach Anspruch 2, **dadurch gekennzeichnet, dass** die Stützeinrichtung (6) eine Mehrzahl von Gliedern (6b, 6c, 6d) zur Aufspannung des Flächenelements (2) umfasst, wobei die Glieder (6b, 6c, 6d) vorzugsweise ein Skelett für das Flächenelement (2) bilden.

4. Verbundstruktur (1) nach einem der vorangehenden Ansprüche, **dadurch gekennzeichnet, dass** Aktoreinrichtung (5) eine Mehrzahl von Aktorelemente zur Verformung des Flächenelements (2) umfasst, wobei die Aktorelemente vorzugsweise als Drähte aus Formgedächtnismaterial ausgebildet sind.

5. Verbundstruktur (1) nach einem der vorangehenden Ansprüche, **dadurch gekennzeichnet, dass** die Aktoreinrichtung (5) und/oder die Sensoreinrichtung (3) und/oder die Steuereinrichtung (4) und/oder die Stützeinrichtung (6) in das Flächenelement (2) eingebettet ist/sind.

6. Verbundstruktur (1) nach einem der vorangehenden Ansprüche, **dadurch gekennzeichnet, dass** das Flächenelement (2) im Ausgangszustand oder in einem der beiden Verformungszustände eben, gekrümmt oder gefaltet ist, wobei das Flächenelement (2) in einem ebenen Zustand vorzugsweise einen polygonalen, bevorzugt viereckigen, besonders bevorzugt quadratischen Umriss aufweist.

7. Verbundstruktur (1) nach einem der vorangehenden Ansprüche, **dadurch gekennzeichnet, dass** die Sensoreinrichtung (3) wenigstens einen der folgenden Sensoren aufweist: Gegenstandssensor, Bewegungssensor, Temperatursensor, Helligkeitssensor, Lautstärkesensor, Entfernungssensor, Beschleunigungssensor, Kraftsensor, Gassensor, wobei der Sensor vorzugsweise in das Flächenelement (2) eingebettet oder eingedruckt ist.

8. Verbundstruktur (1) nach einem der vorangehenden Ansprüche, **dadurch gekennzeichnet, dass** das Flächenelement (2) wenigstens zwei Schichten aufweist, wobei die Schichten vorzugsweise in folgender Reihenfolge von außen nach innen angeordnet sind:
a. Epidermis-Schicht (7).
b. Endoskelett-Schicht, umfassend die Stützeinrichtung (6).
c. Rezeptive Schicht, umfassend die Sensoreinrichtung (3).
d. Neuronale Schicht, umfassend die Steuereinrichtung (4).
e. Muskulatur-Schicht, umfassend die Aktoreinrichtung (5).
f. Epidermis-Schicht (7).

9. Verbundstruktur (1) nach einem der vorangehenden Ansprüche, **dadurch gekennzeichnet, dass** ein durch Überführung des Flächenelements zwischen dem Ausgangszustand und den wenigstens zwei verschiedenen Verformungszuständen erzielbarer Hub, der vorzugsweise senkrecht zu einer Erstreckungsebene des Flächenelements gemessen wird, bei mindestens dem 10-fachen der Dicke des Flächenelements liegt.

10. Verfahren zur Betätigung der Verbundstruktur (1) nach einem der vorangehenden Ansprüche, **dadurch gekennzeichnet, dass** das Verfahren folgende Schritte umfasst:
a. Erfassen von Daten bezüglich der Verbundstruktur (1) oder deren Umgebung und Ausgabe eines darauf basierenden Ausgabesignals mittels der Sensoreinrichtung (3).
b. Betätigen der Aktoreinrichtung (5) mittels der Steuereinrichtung (4) in Abhängigkeit des Ausgabesignals der Sensoreinrichtung (3), um das Flächenelement (2) zwischen dem Ausgangszustand und den wenigstens zwei verschiedenen Verformungszuständen zu überführen.

## Claims

1. Shape changing composite structure (1), comprising: a flexible surface element (2), which is designed to be reversibly converted from an initial state into at least two different deformation states, an actuator means (5) which is designed to move the surface element (2) between the initial state and the at least two different to deformation states, a sensor means (3) which is configured to record data relating to the composite structure (1) or its surroundings and to generate an output signal based thereon, and a control means (4) which is designed to control the actuator means (5) to be operated depending on the output signal of the sensor means (3),
**characterized in that** the actuator means (5), the sensor means (3) and the control means (4) are firmly connected to the surface element (2) and form a deformable unit with the surface element (2).

2. Composite structure (1) according to claim 1, **characterized in that** the composite structure (1) has a support means (6) for stabilizing and maintaining the shape of the surface element (2).

3. Composite structure (1) according to claim 2, **characterized in that** the support means (6) comprises a plurality of links (6b, 6c, 6d) for clamping the surface element (2), the links (6b, 6c, 6d) preferably forming a skeleton for the surface element (2).

4. Composite structure (1) according to one of the preceding claims, **characterized in that** the actuator means (5) comprises a plurality of actuator elements for deforming the surface element (2), wherein the actuator elements are preferably designed as wires made of shape memory material.

5. Composite structure (1) according to one of the preceding claims, **characterized in that** the actuator means (5) and/or the sensor means (3) and/or the control means (4) and/or the support means (6) is/are embedded in the surface element (2).

6. Composite structure (1) according to one of the preceding claims, **characterized in that** the surface element (2) is flat, curved or folded in the initial state or in one of the two deformation states, the surface element (2) in a flat state preferably having a polygonal, preferably quadrangular, particularly preferably square outline.

7. Composite structure (1) according to one of the preceding claims, **characterized in that** the sensor means (3) has at least one of the following sensors: object sensor, motion sensor, temperature sensor, brightness sensor, volume sensor, distance sensor, acceleration sensor, force sensor, gas sensor, the sensor preferably being embedded or printed into the surface element (2).

8. Composite structure (1) according to one of the preceding claims, **characterized in that** the surface element (2) has at least two layers, the layers preferably being arranged in the following order from outside to inside:
a. Epidermis layer (7).
b. Endoskeletal layer, comprising the support means (6).
c. Receptive layer, comprising the sensor means (3).
d. Neural layer, comprising the control means (4).
e. Muscular layer, comprising the actuator means (5).
f. Epidermis layer (7).

9. Composite structure (1) according to one of the preceding claims, **characterized in that** a stroke that can be achieved by transferring the surface element between the initial state and the at least two different deformation states, which is preferably measured perpendicular to an extension plane of the surface element, is at least 10 times the thickness of the surface element.

10. Method for operating the composite structure (1) according to one of the preceding claims, **characterized in that** the method includes the following steps:
a. Acquiring data regarding the composite structure (1) or its surroundings and outputting an output signal based thereon using the sensor means (3).
b. Actuating the actuator device (5) by means of the control means (4) depending on the output signal of the sensor means (3) in order to transfer the surface element (2) between the initial state and the at least two different deformation states.

## Revendications

1. Structure composite (1) à changement de forme, comprenant : un élément plan (2) flexible conçu pour passer de manière réversible d'un état initial à au moins deux états de déformation différents, un dispositif actionneur (5) conçu pour faire alterner l'élément plan (2) entre l'état initial et les au moins deux états de déformation différents, un dispositif capteur (3) configuré pour collecter des données concernant la structure composite (1) ou son environnement et pour générer un signal de sortie en se basant sur lesdites données, et un dispositif de commande (4) conçu pour actionner le dispositif actionneur (5) en fonction du signal de sortie du dispositif capteur (3),
**caractérisé en ce que** le dispositif actionneur (5), le dispositif capteur (3) et le dispositif de commande (4) sont reliés de manière fixe à l'élément plan (2) et forment avec l'élément plan (2) une unité déformable.

2. Structure composite (1) selon la revendication 1, **caractérisée en ce que** la structure composite (1) présente un dispositif support (6) permettant de stabiliser et de préserver la forme de l'élément plan (2).

3. Structure composite (1) selon la revendication 2, **caractérisée en ce que** le dispositif support (6) comprend une pluralité d'éléments (6b, 6c, 6d) permettant de tendre l'élément plan (2), dans laquelle les éléments (6b, 6c, 6d) forment de manière préférée un squelette pour l'élément plan (2).

4. Structure composite (1) selon l'une quelconque des revendications précédentes, **caractérisée en ce que** le dispositif actionneur (5) comprend une pluralité d'éléments actionneurs permettant de déformer l'élément plan (2), dans laquelle les éléments actionneurs sont de manière préférée réalisés sous forme de fils en matériau à mémoire de forme.

5. Structure composite (1) selon l'une quelconque des revendications précédentes, **caractérisée en ce que** le dispositif actionneur (5) et/ou le dispositif capteur (3) et/ou le dispositif de commande (4) et/ou le dispositif support (6) est/sont intégré(s) dans l'élément plan (2).

6. Structure composite (1) selon l'une quelconque des revendications précédentes, **caractérisée en ce que**, dans l'état initial ou dans l'un des deux états de déformation, l'élément plan (2) est plan, incurvé ou plié, dans laquelle l'élément plan (2) présente, dans son état plan, de manière préférée un contour polygonal, de manière plus préférée un contour quadrangulaire, de manière particulièrement préférée un contour carré.

7. Structure composite (1) selon l'une quelconque des revendications précédentes, **caractérisée en ce que** le dispositif capteur (3) présente au moins un des capteurs ci-dessous : capteur d'objet, capteur de mouvement, capteur de température, capteur de luminosité, capteur de volume, capteur de distance, capteur d'accélération, capteur de force, capteur de gaz, dans laquelle le capteur est de manière préférée intégré ou inséré dans l'élément plan (2).

8. Structure composite (1) selon l'une quelconque des revendications précédentes, **caractérisée en ce que** l'élément plan (2) présente au moins deux couches, dans laquelle les couches sont de manière préférée agencées de l'extérieur vers l'intérieur dans l'ordre ci-dessous :
a. couche épidermique (7).
b. couche endosquelettique, comprenant le dispositif support (6).
c. couche réceptive, comprenant le dispositif capteur (3).
d. couche neuronale, comprenant le dispositif de commande (4).
e. couche musculaire, comprenant le dispositif actionneur (5).
f. couche épidermique (7).

9. Structure composite (1) selon l'une quelconque des revendications précédentes, **caractérisée en ce qu'**une course, mesurée de manière préférée perpendiculairement à un plan d'extension de l'élément plan et pouvant être obtenue en faisant alterner l'élément plan entre l'état initial et les au moins deux états de déformation différents, représente au moins 10 fois l'épaisseur de l'élément plan.

10. Procédé d'actionnement de la structure composite (1) selon l'une quelconque des revendications précédentes, **caractérisé en ce que** le procédé comprend les étapes ci-dessous :
a. collecter des données concernant la structure composite (1) ou son environnement et générer un signal de sortie en se basant sur lesdites données à l'aide du dispositif capteur (3).
b. actionner le dispositif actionneur (5) au moyen du dispositif de commande (4) en fonction du signal de sortie du dispositif capteur (3) afin de faire alterner l'élément plan (2) entre l'état initial et les au moins deux états de déformation différents.
